# EUROPEAN PATENT APPLICATION

(11) **EP 2 669 859 A1**
(43) Date of publication of application: **04.12.2013**
(21) Application number: 12187106.5
(22) Date of filing: 03.10.2012
(51) Int. Cl.: G06Q 30/02, G06Q 20/36

(54) **Mobile wallet system**

(30) Priority: 30.05.2012 GB 201209590
(71) Applicant: Barclays Bank PLC, London E14 5HP (GB)
(72) Inventor: Holmes, Stewart, Wilmington, DE 19801 (US); Zaheer, Safwan, Wilmington, DE 19801 (US)
(74) Representative: Cross, James Peter Archibald

(57) **Abstract**

A mobile wallet system providing contextual services to a consumer is described, comprising a mobile wallet on a mobile device associated with the consumer, a payment platform for processing payment transactions by the mobile wallet, a digital content service platform for providing digital content services to the mobile wallet, and an analytics platform for controlling the digital content services provided to the mobile wallet based on collected consumer data.

## Description

### Field of the Invention

This invention relates to a mobile wallet system, and more particularly to an improved system for connecting merchant platforms with consumer devices to enable payments and commerce functionality through a mobile wallet.

### Background of the Invention

Conventional mobile wallet payment transaction systems are generally known, in which mobile devices such as mobile handsets, cell phones, smartphones, personal digital assistants (PDAs), personal music players, laptops, handheld computing devices, etc. are provisioned with an electronic wallet application for processing and management of secure payment transactions with a payment service provider. Typically, these portable electronic devices are configured to enable payment transactions to be made from the electronic wallet as an online, Internet-based transaction, or as a contactless payment transaction with a merchant Point Of Sale (POS) terminal, for example using near field communication (NFC) technology.

The growth in use of mobile smartphones has led to consumers using such devices to search, browse and shop for purchasable goods and services. Consumers want to use these mobile devices to purchase goods and services, and merchants want to build a greater connection with consumers in a way that leads to greater engagement of their products with consumers. In addition, merchants want to use the mobile channel to effectively market and sell their products and services to improve the Return on Investment (ROI) on their marketing efforts. Consumers, on the other hand, also lack a centralized channel where they can not only search for the products/service but also buy and use a related coupon/offer at the point of purchase, thereby enhancing their shopping experiences.

To address these desires, several products have been emerging in the market. For example, a few aggregators, such as ISIS, Google Wallet and PayPal have emerged to provide mobile wallet-based services for mobile commerce between consumers and retailers. These aggregators are attempting to deliver a variety of different content services such as coupons, offers, ads, etc. with the benefit of being relevant to consumer's shopping behaviours and needs, hoping that consumers will repeatedly use their version of mobile wallet to purchase goods and services.

On the other hand, some retailers have started to experiment with their own approach, such as Starbucks, which has developed an easy-to-use, single-purpose payment mobile phone software application (app) that can be used only at Starbucks locations. With the app, consumers can also integrate their Starbucks loyalty card giving them the convenience and experience of shopping using their mobile phones at Starbucks locations. Yet a few other retailers are forming exclusive partnerships with different players in the payment ecosystem, such as banks, acquirers, payment processors and associations, and digital content providers to enable mobile based commerce with consumers.

What is desired is an improved mobile wallet system that facilitates greater efficiency and flexibility for customer and/or retailers.

### Statements of the Invention

Aspects of the present invention are set out in the accompanying claims.

In one aspect, a method is provided in which various commerce based capabilities are tied together to create a mobile wallet. The mobile wallet will host a set of participating merchants, a number of different digital content services, a "cloud-based" analytics platform, and a "cloud-based" payment platform. Specifically, the digital content services controlled by an analytics platform where consumer data can be shared with merchants to engage both in meaningful commerce activities through delivery of target and contextual content services to enhance consumer's searching, shopping and buying behaviour.

In another aspect, a method is provided in which digital coupons and offers functionality will be built for the mobile wallet. Specifically:
- A self-service easy-to-use portal for retailers to place exclusive coupons and offers for the consumers. Consumers will also be able to use the same self-service portal and request the types of coupons and offers they'd like to receive from retailers. Retailers will be able to see what consumers have requested and combine the information with any other data provided by a payment service provider to create relevant coupons and offers.
- Two streams of digital coupons and offers data; one from self-service portal and other sourced from third parties will be fed into the analytics platform. The analytics platform will then store, segment, and use other consumer data it holds to decide whether or not to serve the coupon/offer, which ones to serve, and at what time in order to render a contextual offering to both retailers and consumers. This process adds another layer of filtering to further the relevance of coupons/offers sent to consumers.

In another aspect, a method is provided in which advertisement (Ads) functionality will be built and the way in which advertisements will be selected to serve to consumers of the mobile wallet. Specifically:
- A payment service provider will sign its mobile wallet as a 'publishing platform' with the various mobile ad platform providers and then pass these ads to an 'Ads decision filter'. The Ads decision filter uses other consumer data from a cloud-based analytics platform to decide whether to serve an ad or not, which ads to serve and at what time.
- Development of an ads decision filter as part of the ads service. The ads decision filter will receive incoming ads from the various ad networks and use other consumer specific data that it collects from the cloud-based analytics platform to decide whether to serve an ad, which ad to serve, and when to serve. The ads decision filter continuously communicates with the analytical cloud based platform to exchange data about consumer behaviours to enhance its ads filtering capability. In addition, the ads decision filter stores all ad based performance metrics, such as the number of times the ad is viewed, clicked, and acted upon as per the call-to-action in-the ad by consumers.
- The way in which the mobile ads platform, ad decision filter, and the analytics platform are connected and communicate with each other to exchange consumer data.

In yet another aspect, a method is provided in which consumer data will be collected, stored, and used to enhance the analytics platform to provide relevant and contextual services to consumers of the wallet. Specifically:
- Consumer wallet related data such searching, scanning, clicking, viewing, taking an action, redeeming any of the digital content service will be collected as User Information.
- Data from the self-service portal where consumers select the type of coupons/offers they would like to receive will also be collected.
- Ads related data of consumers will be collected whenever they view, click, and act on the call-to-action of an ad served in the wallet. In addition, when available, data of consumer's social or gaming behaviour on the web (for example, interactions with a social networking website, such as Facebook or Google) particularly around the ads they have viewed, clicked, and acted upon will be collected.
- Gift and/or pre-paid card related data will be collected whenever consumers buy, load, send, use a gift and/or pre-paid card. In addition data from consumers social or gaming activities on the web, e.g. through social networking or gaming websites, particularly around their gifting behaviour will be collected.
- Rewards and loyalty programs related data of consumers will be collected. Data will include types, number, and points earned and redeemed of all loyalty and rewards programs consumers have added in the wallet.
- When possible, any data that resides in a retailer's legacy system such as one in the Customer Relationship Management (CRM) database providing information about consumers' use and redemption of coupon/offers, pre-paid/gift cards or any digital content service will be collected.
- The time and location of various consumer triggers will be collected in a 'Time & Location' part of the analytics platform.
- A separate profile pertaining to each consumer will be maintained in the analytics platform and continuously updated as consumers use the wallet for various shopping activities.

In this way, a payment service provider is enabled with the facility to own and have the discretion to share consumer data with merchants in a way it benefits both retailers and consumers and does not place any of the participating merchants at a competitive disadvantage.

In yet a further aspect, a method is provided in which each consumer will receive different digital content service based on their individual shopping behaviour and needs.

### Brief Description of the Drawings

There now follows, by way of example only, a detailed description of embodiments of the present invention, with references to the figures identified below.

Figure 1 is a functional block diagram showing the main components of a mobile wallet system according to an exemplary embodiment of the invention.

Figure 2 is a schematic block diagram showing the main components of an analytics platform of the payment service provider in Figure 1 according to an embodiment of the invention.

Figure 3 is a schematic block diagram showing the main components of a mobile wallet system according to another embodiment of the invention.

Figure 4 is a schematic block diagram showing the main components of a mobile wallet system according to yet another embodiment of the invention.

### Detailed Description of Embodiments of the Invention

### Mobile Wallet System

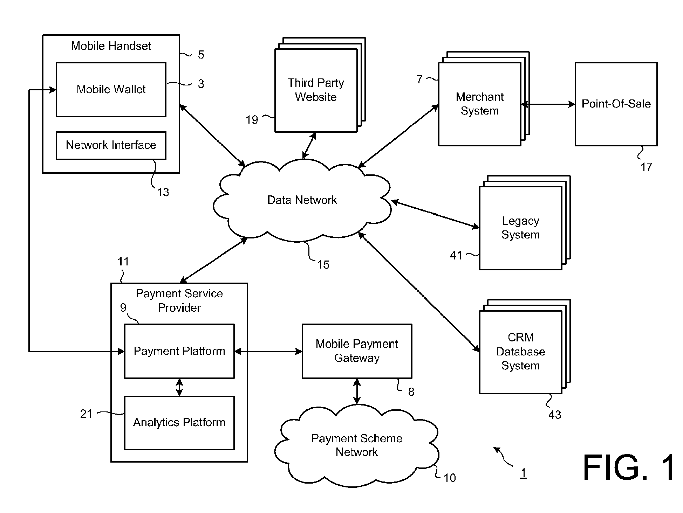

Referring to Figure 1, there is illustrated a block diagram of a mobile wallet system 1 according to an exemplary embodiment of the present invention, for implementing a "cloud-based" mobile wallet 3 on a mobile handset 5. The mobile wallet system 1 enables mobile payment transactions to be effected between the mobile wallet 3 and merchant (retailer) systems 7 for the purchase of goods or services, via a cloud-based payment platform 9 of a payment service provider 11. Such payment platforms for processing payment transactions via a payment scheme network 10 are of a type that are known *per se* in mobile wallet systems and need not be described further.

The mobile wallet 3 can be issued by the payment service provider 11 such as an ID card provider, credit card issuer or bank, which is responsible for authorizing and settling the payment of funds for service or products purchased by the user of the mobile handset 5. The mobile wallet 3 can be downloaded from the payment service provider 11 and provided as application software running on the handset operating system.

The mobile handset 3 can be any suitable mobile device such as a cellular device, a smartphone, etc. that includes software and/or hardware components to communicate with other mobile devices over a cellular network and to communicate wirelessly with the payment service provider 11.

The mobile handset 5 also includes a network interface 13 and communicates electronically with the payment service provider 11 via a data network 15. The data network 15 may be any suitable data communication network such as a wireless network, a local- or wide-area network including a corporate intranet or the Internet, using for example the TCP/IP protocol, or a cellular communication network such as GPRS, EDGE, CDMA, UMTS or 3G/4G, for example. Such communication protocols are of a type that are known per se in data networks and need not be described further.

The term "cloud-based" refers to a system architecture whereby some or all of the information and data is stored in a remote server or servers of the payment service provider 11 rather than on the mobile device 5. For the case of the mobile wallet 3 of this embodiment, consumers are able to download the mobile wallet 1 and load any credit or debit or prepaid card of their choice to make payments. The financial credentials of consumers, such as credit/debit card number(s) and any payment related data can be entered by the user to the mobile wallet 3 on the mobile handset 5 and transmitted to the remote payment platform 9. The associated data is then securely stored and processed by the cloud-based payment platform 9. The payment platform 9 of the mobile wallet 1 may comply with the Payment Card Industry (PCI) data security standards.

In one example of a purchase transaction with a Point-Of-Sale (POS) 17 of a merchant (retailer) 7, the payment amount and any other payment transaction related information is encoded as a digital signature, such as a 2-D QR code, a digital watermark, an NFC signature, etc. The digital signature may be displayed on the POS 17 or output by the POS 17 on a paper or digital receipt or displayed on an internet or web based interface. Consumers then use the mobile wallet 3 to scan the digital signature to initiate the payment transaction process. After the consumer scans the digital signature, the associated payment transaction related data is sent to the cloud based payment platform 9, which then processes the payment transaction data and sends it to a mobile payment gateway 8. The mobile payment gateway 8 then communicates with the payment scheme networks 10 and payment service provider 11 for payment authorization and authentication. The resulting information is then sent back to cloud based payment platform 9, which then displays either a confirmed or denial notification in the merchant's POS 17.

It will be appreciated there are many other alternative ways in which associated data for a payment transaction can be communicated between the mobile wallet 3 and a merchant system 7 via the payment service provider 11 in order to complete a payment transaction.

It will also be appreciated that the mobile handset 5 may include additional components included in commonly known mobile handsets, such as a user input interface, a display, a microphone, an earpiece speaker, a camera and controller, and/or a GPS receiver etc., which are not shown for clarity.

Retailers will be able to participate in the mobile wallet system 1 by ensuring related infrastructure of the associated merchant systems 7, such as the POS 17 equipment (which may have many forms such as tablets, POS integrated with payment terminals etc), payment modules of the merchant websites, payment processors, acquirers, and other hardware and software related equipment, is supported by the cloud-based mobile wallet 3 and payment platform 9. The mobile wallet 3 may include specific functional support for a number of participating merchant (retailers) 7 of the mobile wallet system 1. The participating merchants (retailers) 7 will have the exclusive opportunity to promote their products and services to consumers of the mobile wallet system 1. Merchants will also have the added benefit of utilizing consumer data that will be collected through the mobile wallet system 1 to provide targeted and contextual services to consumers. The term 'contextual' implies knowledge of consumer preferences, locations and times of predefined consumer activities, in order to be able to serve consumers targeted offers at the appropriate time, for the maximum chance of the service being used by consumer.

The mobile wallet system 1 provides a number of different digital content services to the mobile wallet 3 of the consumer's mobile handset 5. Examples of digital content services include but are not limited to coupons, offers, ads, loyalty and reward programs, scanning, searching, and gift/pre-paid cards. The digital content may be mixed with social and gaming elements to engage consumes with merchant products and services. For example, consumers may scan a product using the mobile wallet 3 and/or mobile device 5 , and consequently receive an offer or coupon for the item scanned at that particular instance, or they may be given certain credit for scanning or towards posting a retailer's product on social networks etc. Both the payment service provider 11 and participating merchant systems 7 have the ability to set and serve specific digital content services to consumers of the mobile wallet system 1.

The payment platform 9 will be connected to a cloud-based analytics platform 21 for managing and controlling the various digital content information and services that may be pushed to consumers. The analytics platform 21 processes and stores consumer data information that is collected over time from consumer behaviours by consumers in the mobile wallet system 1.

### Analytics Platform

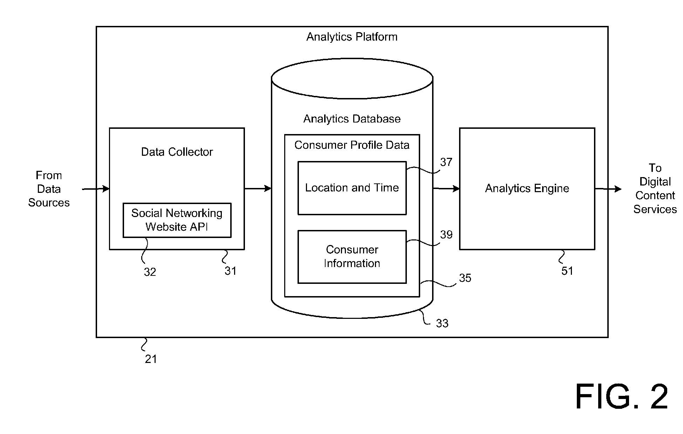

Figure 2 is a schematic block diagram showing in more detail the functional component of the analytics platform 21. As shown in Figure 2, the analytics platform 21 includes one or more data collector modules 31 for collecting consumer data from a plurality of data sources. The data collector modules 31 may be based on Application Programmable Interfaces (API) associated with respective data sources. For example, information about consumer activities and behaviour on third party social networking or gaming websites 19 and applications, such as Facebook or Google, can be collected via respective publicly available APIs 32. The data collector modules 31 may be triggered by consumer related activities, such as using the mobile wallet 3 and/or mobile device 5 to search for products/services, scanning, clicking, viewing, taking an action, redeeming any of the digital content services hosted in the mobile wallet 3, and any of the consumer related activities can be used for data gathering purposes. The information can be continuously updated as consumers use the mobile wallet system 1 for various commerce and shopping related activities.

In an exemplary embodiment, consumer data is collected in one or more of the following ways:
1. Consumer's location and time can be collected any time the consumer pays at a POS 17 or scans or searches a product/service using the mobile wallet 3 and/or mobile device 5.
2. User related information, such as the number of times the user has clicked, viewed, saved, acted on the call-to-action of an advertisement served in the mobile wallet 3, and/or redeemed any of the digital content services, can be collected.
3. Information from loyalty and rewards programs associated with the consumer can be collected. Data may include the scheme type, consumer identification number, and points earned and redeemed of all loyalty and rewards programs consumers have added in the mobile wallet 3. Additionally, any rewards and loyalty program data that resides at a merchant (retailer's) system's 7 legacy system 41, such as a Customer Relationship Management (CRM) database 43, can be collected, when possible, and integrated with other information that is gathered from the use of the rewards and loyalty programs stored in the mobile wallet system 1.
4. Gift and/or pre-paid card related data can be collected whenever consumers buy, load, send, use a gift and/or pre-paid card.
5. Coupon and offers related data can be collected whenever consumers click, store, save, and redeem coupons and/or offers. When possible, any data that resides in a merchant (retailer) system 7 legacy system 41 such as one in the CRM database 43 providing information about consumers' use and redemption of coupon and/or offers can also be collected. Additionally, data from a self-service coupon/offer portal where consumers can select the type of coupons/offers they would like to receive, and/or a third party coupon/offer service can be collected.
6. Information about consumer activities and behaviour on third party social networking or gaming websites 19 and applications can be collected via respective publicly available APIs. For example, activity and behaviour related to the advertisements the consumer has viewed, clicked, and acted upon can be collected. As another example, information related to gifting behaviour via social or gaming networks can also be collected.
7. Other publicly available information about consumers can be collected from various online (other third party web sites 19 for example) and offline (retailer legacy systems 41 for example) sources, as appropriate.

The digital content services controlled by an analytics platform 21 enables the payment service provider 11 to connect merchants and retailers with consumers of the mobile wallet system 1 in meaningful commerce activities through delivery of targeted and contextual content services to enhance consumers' searching, shopping and buying behaviour.

The collected consumer data is stored in an analytics database 33. Data pertaining to each individual consumer in the mobile wallet system 1 can be collected and stored separately. An analytics engine 51 processes the collected data to generate and maintain a unique profile 35 of each consumer in the cloud-based analytics platform 21. Data relating to the time and location of the various consumer triggers may be stored in a location and time portion 37 of the consumer profile 35 in the analytics database 33. As discussed above, consumer triggers may include activities and behaviour such as when a consumer makes a payment, coupon/offer redemption, search, scan of a product/service, uses a rewards/loyalty program, etc. User and behaviour related information such as the number of clicks the consumer has made on a digital service, views, call-to-action of ads etc may be stored in a consumer information portion 39 of the consumer profile 35. A unique consumer ID can be assigned to each consumer for identification and tagging of consumer profile data 35 in the analytics platform 21.

The consumer profile 35 can thereby be continuously updated as consumers use the mobile wallet 3 for various shopping related activities. Data pertaining to each consumer will continuously be updated forming a feedback loop to enrich and enhance consumer data residing in the analytics platform 21.

The payment service provider 11 effectively owns all consumer and retailer and merchant related data that it collects from the mobile wallet system 1. It will also have the discretion to share the collected consumer profile data 35 with retailers in a way it benefits both retailers and consumers and does not place any of the participating retailers at a disadvantage.

### Coupon and Offers Service

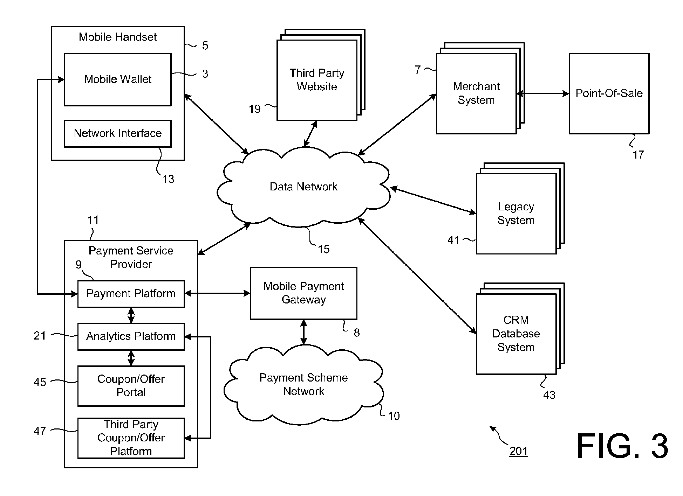

Figure 3 is a block diagram of a mobile wallet system 201 according to a further embodiment in which coupon and offers services are provided for the mobile wallet 3. Corresponding reference numerals to those of preceding figures are used where appropriate for corresponding elements.

In this embodiment, the mobile wallet system 201 further includes a self-service coupon/offer portal 45 for merchant (retailers) system 7 to provide exclusive coupons and offers for the consumers. Consumers will also be able to use the same portal 45 to request the types of coupons and offers they would like to receive from merchant (retailers) system 7. The self-service coupon/offer portal can be a web or mobile based portal.

The mobile wallet system 201 also includes a third party coupon/offer platform 47 for sourcing coupons and offers directly from third parties, such as coupons/offers aggregators. As illustrated in Figure 3, the self-service coupon/offer portal 45 and the third party coupon/offer platform 47 can be part of the service provider platform 11.

Two streams of coupons and offers data, one from the self-service coupon/offer portal 45 and the other from third party coupon/offer platform 47 is sent to the analytics platform 21 for processing by the analytics engine 51. The analytics engine 51 then decides which coupon/offer to serve to consumers for relevance to consumer needs. The corresponding information is then stored and updated in the consumer profiles 35 to further enhance consumer data residing in the analytics platform 21..

In an exemplary embodiment, coupons and offers are provided to consumers in the following way:
1. Coupons and offers that are served to consumers have the benefit of being targeted and relevant to consumers, i.e. will serve the need of consumers at the right time and place. This is because retailers will have knowledge about consumer needs and past behaviour through the analytics platform 21 and the benefit of using the self-service portal 45 in offering the right coupons/offers.
2. Participating retailers are able to sign-on to the self-service portal 45 to develop coupons and offers they would like to offer to consumers of the mobile wallet system 1. The retailers are also able to look at the types of coupons, offers, and products/services that consumers have elected to receive from retailers. In addition, retailers are also able to combine other consumer specific data provided by the payment service provider 11 to further make the coupons and offers more relevant to consumers.
3. Consumers of the wallet are able to sign-on to the self-service portal 45 and request the types of products/services, coupons, and offers they would like to receive from participating retailers.
4. The self-service coupon/offer portal 45 will be an easy-to-use utility for retailers to add exclusive coupons and offers. Retailers will also have the ability to add social and/or gaming effects to the services they develop specifically for consumers. For example, the system 201 is able to automatically determine from the collected consumer data when a consumer is at or nearby a particular merchant or retailer location, for example by monitoring and identifying data received from a consumer who has checked-in their current location with the mobile wallet system 1, either directly through the mobile wallet 3 on the mobile handset 5, or indirectly through the mobile wallet 3 via data received from a third party social networking or gaming application, module or website, when the consumer has updated their current location and status on a social networking or gaming website (for example, by posting a location and status update on their Facebook or Google profiles). In response, the system 201 can serve an instant coupon/offer on behalf of the merchant or retailer to that particular consumer. As another example, the system 201 is able to automatically monitor and analyse behavioural patterns related to consumer visits to a particular retailer. The system 201 can then reward consumers who visit a particular retailer location certain number of times or during a particular time of the day, on behalf of that retailer. Consumers will also be able to sign-in to the self-service portal 45 and request to receive specific coupons, offers, and other products/services from retailers.
5. Separately, the third party coupon/offer platform 47 provides a coupons and offers service that can be utilized to provide coupons and offers to consumers of the mobile wallet system 1. For example, one way of sourcing the coupons and offers will be through the third party coupon/offer provider's APIs or other software tools.
6. Consumer activity and behaviour data from coupons/offers provided by the self-service coupon/offer portal 45 and the third party coupon/offer platform 47 is transmitted to the analytics platform 21, which will then stores, processes and integrates the coupon/offer data with other stored consumer profile data to determine: whether or not to serve a particular coupon/offer to a particular consumer, which coupons/offers to serve, and at what time to provide a contextual offering to both retailers and consumers. This process adds another layer of filtering to further sharpen the relevance of coupons/offers that are sent to consumers.

### Advertisement Service

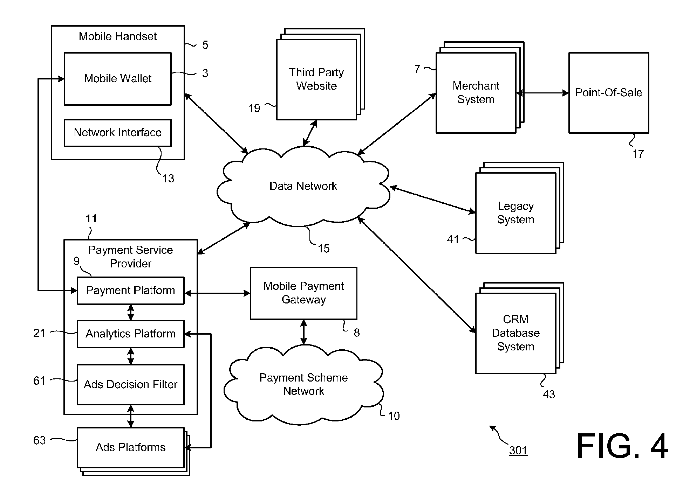

Figure 4 is a schematic block diagram illustrating a system according to a further embodiment of a mobile wallet system 301 in which advertisement services are provided for the mobile wallet 3. Corresponding reference numerals to those of preceding figures are used where appropriate for corresponding elements.

In this embodiment, the payment service provider 11 of the mobile wallet system 301 is further configured as a 'publishing platform' for a plurality of external mobile advertisement platform providers 63. The payment service provider 11 further includes an ads decision filter platform 61 that receives advertisements from the mobile advertisement platform providers 63. The ads decision filter platform 61 communicates and exchanges information with the cloud-based analytics platform 21 to determine whether to serve an advertisement to a particular consumer, which ads to serve and at what time to serve the advertisement to that consumer.

In an exemplary embodiment, targeted advertisements are provided to the consumers as follows:
1. The payment service provider 11 provides an effective ads serving platform for participating retailers of the mobile wallet system 301. The advertisements that will be served will have maximum potential to be viewed and subsequently acted upon by consumers because of being targeted and therefore relevant to the recipient consumer's shopping needs. The ads decision filter platform 61 is configured to serve advertisements to consumers based on consumer profile data 35 collected and processed by the cloud-based analytics platform 21, for example as discussed in the embodiments above.
2. The payment service provider 11 will sign-up and register the mobile wallet system 301 as a publishing platform with the various mobile ad platforms 63. The mobile ad platforms 63 may be registered with the system based on the needs of retailers and consumers.
3. All mobile ad platforms registered with the mobile wallet system 301 are connected to the ads decision filter platform 61.
4. The ads decision filter platform 61 is a key component of the advertisements delivery service within the mobile wallet system 301. The ads decision filter platform 61 will receive incoming advertisements from the various ad networks and use other consumer specific data that it receives from the cloud-based analytics platform 21 to decide whether to serve an ad, which ad to serve, and when to serve. The ads decision filter platform 61 continuously communicates with the analytical platform 21 to exchange data about consumer behaviours to further enhance its advertisement filtering capability. In addition, the ads decision filter platform 61 monitors and stores all advertisement based performance metrics, such as the number of times the advertisement is viewed, clicked, and acted upon as per the call-to-action in the ad by consumers.
5. The ads decision filter platform 61 will regularly communicate with the cloud-based analytics platform 21 to receive consumer data information used for selecting advertisements to be served in the mobile wallet system 301 and to send information about advertisement performance back into the analytics platform 21 for storage and processing to enhance the various digital content services that are hosted in the mobile wallet system 1.

The benefit of the above approach is that advertisements can be efficiently and effectively served to consumers in a targeted manner, and the targeted advertisements will be relevant to consumers' searching, shopping and buying behaviour and have maximum potential to be viewed and subsequently acted upon by consumers of the mobile wallet system. This will then enable retailers to engage consumers with its various products/services to build a greater connection with consumers.

### Alternative Embodiments

It will be understood that embodiments of the present invention are described herein by way of example only, and that various changes and modifications may be made without departing from the scope of the invention. For example, aspects and features from one or more of the embodiments described above can be combined to form further embodiments.

In the embodiments described above, a mobile wallet system is described for implementing a mobile payment transaction between a mobile wallet of a mobile handset and a payment service provider. As those skilled in the art will appreciate, in alternative embodiments, the mobile handset can instead or additionally be any suitable mobile device that includes software and/or hardware components to communicate wirelessly with the payment service provider, such as, but not limited to, a handheld computing device, a portable digital assistant, a portable media player, a gaming device, a pocket PC, etc.

In the embodiments described above, the mobile handset stores a mobile wallet module (also referred to as an application, computer program or software) in memory, which when executed, enables the mobile handset to implement embodiments of the present invention as discussed herein. As those skilled in the art will appreciate, the software may be stored in a computer program product and loaded into the mobile handset using any known instrument, such as removable storage disk or drive, hard disk drive, or communication interface, to provide some examples.

In the embodiments described above, the payment service provider provides various cloud-based services and functionality via respective component platforms, such as a payment platform, an analytics platform, a coupon/offer portal and an advertisement filtering module. It will be appreciated that the component platforms of the payment service provider may be implemented as software and/or hardware modules on a single server or on a plurality of servers, at a single physical location or in a distributed server arrangement. Software for configuring one or more servers to become configured as the payment service provider of the above embodiments software may also be stored in a computer program product and loaded into the server arrangement using any known instrument.

Further alternative embodiments may be envisaged, which nevertheless fall within the scope of the following claims.

## Claims

1. A mobile wallet system for providing contextual services to a consumer, comprising:
a mobile wallet on a mobile device associated with the consumer;
a payment platform for processing payment transactions by the mobile wallet;
a digital content service platform for providing digital content services to the mobile wallet; and
an analytics platform for controlling the digital content services provided to the mobile wallet based on collected consumer data.

2. The system of claim 1, wherein the digital content service platform comprises a digital coupons and offers platform for providing digital coupons and offers to the mobile wallet.

3. The system of claim 3, wherein the analytics platform determines the digital coupons and offers to provide to the consumer's mobile device based at least on data received from the digital coupons and offers platform .

4. The system of any preceding claim, wherein the digital content service platform comprises an advertisement filter platform for providing advertisements to the consumer's mobile device, wherein the advertisement filter platform determines the advertisements to provide to the consumer's mobile device based on data received from the analytics platform.

5. The system of any preceding claim, wherein the analytics platform is operable to receive data indicative of consumer-related activity and behaviour.

6. The system of claim 5, wherein the consumer-related activity and behaviour data includes a location and time of the activity and behaviour.

7. The system of claim 5, wherein the consumer-related activity and behaviour data includes data indicative of when the consumer is at or nearby a predefined location.

8. The system of claim 7, wherein the collected consumer data includes location data received from the consumer who has checked-in a current location with the mobile wallet system or updated a current location and status on a social networking or gaming website.

9. The system of claim 8, wherein the digital content service is a coupon, offer and/or advertisement for a merchant or retailer associated with the predefined location.

10. The system of claim 8, wherein the analytics platform is operable to monitor and analyse behavioural patterns related to consumer visits to a particular retailer and/or browsing and searching activity using the mobile device, based on the collected consumer data.

11. The system of claim 5, wherein the consumer-related activity and behaviour data includes the number of times the consumer clicked, viewed, saved and/or acted on the call-to-action of an advertisement served in the mobile wallet.

12. The system of any preceding claim, wherein the analytics platform collects consumer-related activity and behaviour data from data sources via respective APIs.

13. A method of providing contextual services in a mobile wallet system, the method comprising:
collecting user information from a mobile wallet on a mobile device associated with the consumer;
storing the collected user information as consumer profile data for the consumer;
and
providing digital content services to the consumer based on the consumer profile data.

14. The method of claim 13, further comprising:
collecting coupon and offer related data associated with coupons and offers selected by the consumer;
collecting advertisement related data associated with advertisements selected by the consumer; and
storing the coupon and offer related data and advertisement related data with the collected user information as consumer profile data for the consumer.

15. A storage medium comprising machine readable instructions stored thereon for causing a computer system to become configured as the mobile wallet system in accordance with any one of claims 1 to 12, or to perform the method in accordance with claim 13 or 14.

## Amended claims

### Amended claims in accordance with Rule 137(2) EPC.

**1.** A mobile wallet system for providing contextual services to a consumer, comprising:
a mobile wallet on a mobile device associated with the consumer;
a payment platform for processing payment transactions by the mobile wallet;
a digital content service platform for providing digital content services to the mobile wallet; and
an analytics platform for controlling the digital content services provided to the mobile wallet based on collected consumer data,
**characterised in that** the collected consumer data includes location data received from the consumer who has checked-in a current location with the mobile wallet system or updated a current location and status on a social networking or gaming website, wherein the analytics platform determines the digital content services for the mobile wallet based on the received location data.

**2.** The system of claim 1, wherein the digital content service platform comprises a digital coupons and offers platform for providing digital coupons and offers to the mobile wallet.

**3.** The system of claim 3, wherein the analytics platform determines the digital coupons and offers to provide to the consumer's mobile device based at least on data received from the digital coupons and offers platform.

**4.** The system of any preceding claim, wherein the digital content service platform comprises an advertisement filter platform for providing advertisements to the consumer's mobile device, wherein the advertisement filter platform determines the advertisements to provide to the consumer's mobile device based on data received from the analytics platform.

**5.** The system of any preceding claim, wherein the analytics platform is operable to receive data indicative of consumer-related activity and behaviour.

**6.** The system of claim 5, wherein the consumer-related activity and behaviour data includes a location and time of the activity and behaviour.

**7.** The system of claim 5, wherein the consumer-related activity and behaviour data includes data indicative of when the consumer is at or nearby a predefined location.

**8.** The system of claim 1, wherein the digital content service is a coupon, offer and/or advertisement for a merchant or retailer associated with the predefined location.

**9.** The system of claim 1, wherein the analytics platform is operable to monitor and analyse behavioural patterns related to consumer visits to a particular retailer and/or browsing and searching activity using the mobile device, based on the collected consumer data.

**10.** The system of claim 5, wherein the consumer-related activity and behaviour data includes the number of times the consumer clicked, viewed, saved and/or acted on the call-to-action of an advertisement served in the mobile wallet.

**11.** The system of claim 5, wherein the consumer-related activity and behaviour data includes the data relating to consumer visits to a particular retailer location.

**12.** The system of any preceding claim, wherein the analytics platform collects consumer-related activity and behaviour data from data sources via respective APIs.

**13.** A method of providing contextual services in a mobile wallet system, the method comprising:
collecting user information from a mobile wallet on a mobile device associated with the consumer;
storing the collected user information as consumer profile data for the consumer;
and
providing digital content services to the consumer based on the consumer profile data,
**characterised in that** the collected consumer data includes location data received from the consumer who has checked-in a current location with the mobile wallet system or updated a current location and status on a social networking or gaming website.

**13.** The method of claim 12, further comprising:
collecting coupon and offer related data associated with coupons and offers selected by the consumer;
collecting advertisement related data associated with advertisements selected by the consumer; and
storing the coupon and offer related data and advertisement related data with the collected user information as consumer profile data for the consumer.

**14.** A storage medium comprising machine readable instructions stored thereon for causing a computer system to become configured as the mobile wallet system in accordance with any one of claims 1 to 11, or to perform the method in accordance with claim 12 or 13.
